# EUROPÄISCHE PATENTSCHRIFT

(11) **EP 2 193 579 B1**
(45) Veröffentlichungstag und Bekanntmachung des Hinweises auf die Patenterteilung: **22.02.2012**
(21) Anmeldenummer: 08802200.9
(22) Anmeldetag: 15.09.2008
(51) Int. Cl.: H01R 13/71

(54) **FUNKTIONSELEMENT EINER TELEKOMMUNIKATIONSANLAGE**
FUNCTIONAL ELEMENT OF A TELECOMMUNICATION SYSTEM
ÉLÉMENT FONCTIONNEL D'UNE INSTALLATION DE TÉLÉCOMMUNICATION

(30) Priorität: 02.10.2007 DE 202007013819 U
(43) Veröffentlichungstag der Anmeldung: 09.06.2010
(73) Patentinhaber: CCS Technology Inc., Wilmington, DE 19803 (US)
(72) Erfinder: MATTHIES, Jürgen, 58300 Wetter (Ruhr) (DE); BREUER-HECKEL, Mike, 44143 Dortmund (DE)
(74) Vertreter: Sturm, Christoph
(86) Internationale Anmeldenummer: PCT/EP2008/007658
(87) Internationale Veröffentlichungsnummer: WO 2009/046813

(56) Entgegenhaltungen:
- WO-A-98/31157
- US-A- 3 627 929
- US-A- 3 976 850

## Beschreibung

Die Erfindung betrifft ein Funktionselement einer Telekommunikationsanlage nach dem Oberbegriff des Anspruchs 1.

In der Telekommunikationstechnik kommen Verteilerleisten zum Einsatz, um Kabeladern sogenannter Teilnehmerkabel und/oder Systemkabel und/oder Rangierkabel anzuschließen. Aus dem Produktkatalog "Anschluss- und Verteilersysteme, Ausgabe 1, Corning Cable Systems GmbH & Co. KG, Jahr 2000" sind unterschiedliche Verteilerleisten von Telekommunikationsanlagen bekannt, wobei sämtliche Verteilerleisten mehrere Funktionselemente umfassen.

Jedes Funktionselement weist in einem Gehäuse aufgenommene Kontaktfedern auf. Die Kontaktfedern bilden an einer Vorderseite des Gehäuses als IDC-Kontakte ausgebildete Anschlusselemente für den Anschluss von Kabeladern eines Teilnehmerkabels und/oder Systemkabels und/oder Rangierkabels aus. In einem von den als IDC-Kontakte ausgebildeten Anschlusselementen beabstandeten Abschnitt verfügen die Kontaktfedern über Kontaktpunkte.

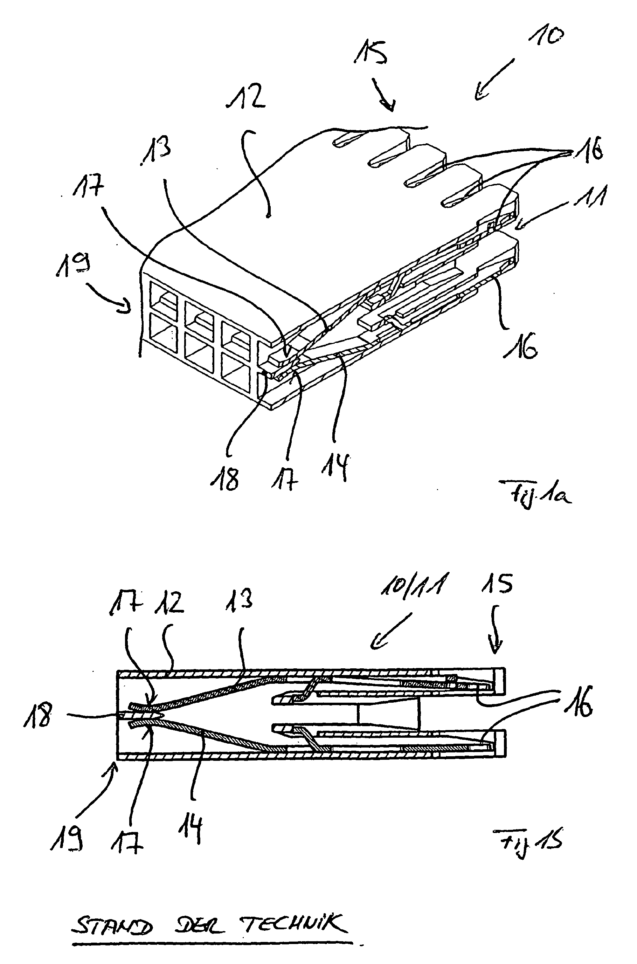

Fig. 1a und 1b zeigen unterschiedliche Ansichten eines Querschnitts durch eine Verteilerleiste 10 einer Telekommunikationsanlage im Bereich eines aus dem Stand der Technik bekannten, als Schaltelement ausgebildeten Funktionselements 11, wobei die Verteilerleiste 10 mehrere nebeneinander angeordnete Funktionselemente 11 umfasst.

Jedes der Funktionselemente 11 der Verteilerleiste 10 weist in einem Gehäuse 12 aufgenommene Kontaktfedern 13, 14 auf, wobei die Kontaktfedern 13, 14 übereinander positioniert sind und im Bereich einer Vorderseite 15 des Gehäuses 12 als IDC-Kontakte ausgebildete Anschlusselemente 16 für den Anschluss von Kabeladern eines Teilnehmerkabels und/oder Systemkabels und/oder Rangierkabels ausbilden. Beabstandet von den Anschlusselementen 16 bilden die Kontaktfedern 13, 14 Kontaktpunkte 17 aus, die sich bei dem als Schaltelement ausgebildeten Funktionselement nicht berühren, sondern vielmehr unter Zwischenanordnung eines Trennstegs 18 voneinander getrennt sind.

Dabei erstreckt sich gemäß Fig. 1 a der Trennsteg 18 über die gesamte Breite von über den Trennsteg 18 zu trennenden Kontaktfedern 13, 14, sodass ausschließlich ausgehend von der Vorderseite 15 ein als Prüfeinrichtung oder Splittereinrichtung oder Schutzeinrichtung ausgebildetes Element unter Bereitstellung eines Kontakts zwischen den ursprünglich getrennten Kontaktfedern 13, 14 zwischen dieselben eingeschoben werden kann. Bei einem solchen Funktionselement, bei welchem sich der Trennsteg 18 über die gesamte Breite der Kontaktfedern 13, 14 erstreckt, ist es nicht möglich, ein als Splittereinrichtung oder Schutzeinrichtung oder Prüfeinrichtung ausgebildetes Element ausgehend von einer der Vorderseite 15 gegenüberliegenden Rückseite 19 des Gehäuses 12 zwischen die Kontaktfedern 13, 14 zu schieben.

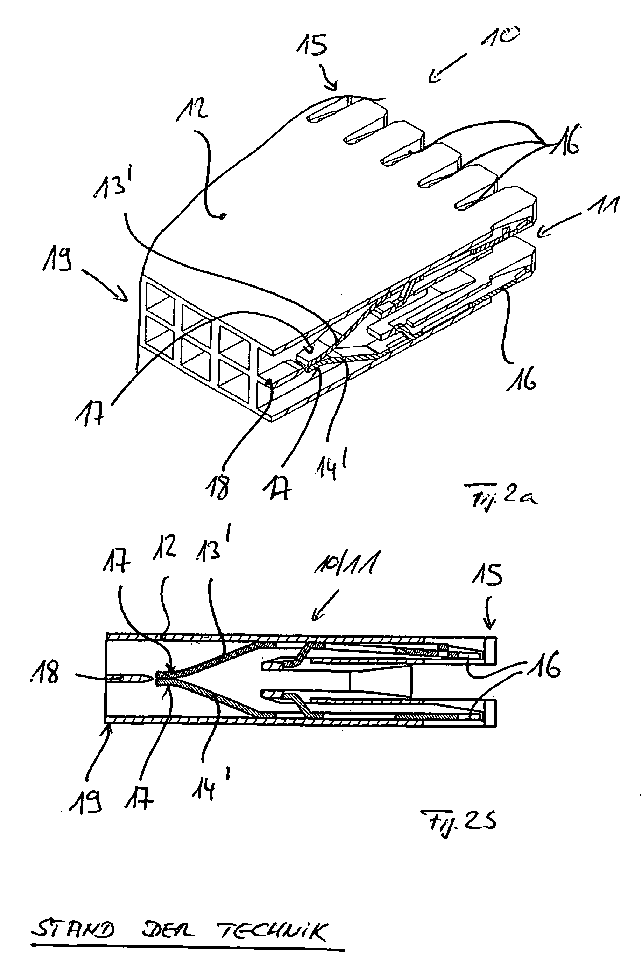

Fig. 2a und 2b zeigen unterschiedliche Ansichten eines Querschnitts durch eine Verteilerleiste 10 einer Telekommunikationsanlage im Bereich eines aus dem Stand der Technik bekannten, als Trennelement ausgebildeten Funktionselements 11, wobei sich das Funktionselement der Fig. 2a, 2b vom Funktionselement der Fig. 1a und 1 b nur dadurch unterscheidet, dass die Kontaktfedern 13', 14' verkürzt ausgebildet sind, sodass der Trennsteg 18 an denselben nicht anliegt und sich die Kontaktpunkte 17 derselben berühren können. Daraus folgt, dass zwar das Gehäuse 12 samt Trennsteg 18 zur Ausbildung eines Schaltelements oder Trennelements unverändert bleiben kann, es müssen jedoch unterschiedlich lange Kontaktfedern bereitgehalten werden.

Die WO-A-9831157 offenbart ein Funktionselement einer Telekommunikationsanlage mit in einem Gehäuse aufgenommenen Kontaktfedern, wobei die Kontaktfedern an einer Vorderseite des Gehäuses als IDC-Kontakte ausgebildete Anschlusselemente für den Anschluss von Kabeladern eines Kabels bilden, mit in einem von den Anschlusselementen beabstandeten Abschnitt von den Kontaktfedern ausgebildeten Kontaktpunkten. Das Funktionselement kann als Trennelement oder als Schaltelement benutzt werden. Als Trennelement ausgeführt, offenbart WO-A-9831157 zusätzlich, dass die Kontaktpunkte sich berühren. Als Schaltelement ausgeführt offenbart WO-A-9831157 zusätzlich, dass die Kontaktpunkte unter Zwischenanordnung eines Trennstegs zwischen den Kontaktfedern voneinander getrennt sind, wobei der Trennsteg die übereinander positionierten Kontaktfedern derart berührt, dass die Kontaktpunkte der Kontaktfedern voneinander getrennt sind.

Weiterer Stand der Technik ist aus US-A-3976850 und US-A-3627929 bekannt.

Ein Funktionselement ist aus der nachveröffentlichten WO 2009/030354 A1 bekannt, welches als Stand der Technik nach Art. 54(3) EPÜ gilt. Hiervon ausgehend liegt der vorliegenden Erfindung das Problem zu Grunde, ein neuartiges Funktionselement einer Telekommunikationsanlage zu schaffen.

Dieses Problem wird durch ein Funktionselement gemäß Anspruch 1 gelöst. Erfindungsgemäß weist der zwischen übereinander positionierten, typischerweise identisch ausgebildeten Kontaktfedern angeordnete Trennsteg eine geringere Breite als die Kontaktfedern auf, wobei zur Ausbildung eines Trennelements der Trennsteg in Ausnehmungen der übereinander positionierten Kontaktfedern derart hineinragt, dass die Kontaktpunkte der Kontaktfedern sich berühren.

Das erfindungsgemäße Funktionselement vermeidet alle den aus dem Stand der Technik bekannten Funktionselementen anhaftenden Nachteile. So kann beim erfindungsgemäßen Funktionselement das Gehäuse samt Trennsteg zur Ausbildung eines Schaltelements oder eines Trennelements unverändert bleiben. Weiterhin kann die Länge der entsprechend bereitzuhaltenden Kontaktfedern unverändert bleiben. Zur Ausbildung eines Trennelements müssen lediglich in die Kontaktfedern Ausnehmungen eingebracht werden, in welche der Trennsteg hineinragen kann.

Darüber hinaus kann beim erfindungsgemäßen Funktionselement sowohl ausgehend von der Vorderseite als auch ausgehend von der Rückseite ein als Prüfeinrichtung oder Splittereinrichtung oder Schutzeinrichtung ausgebildetes Element unter Bereitstellung eines Kontakts zwischen den Kontaktfedern des Funktionselements zwischen dieselben eingeschoben werden.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigen:
- Fig. 1a, 1b: Querschnitte durch eine Verteilerleiste im Bereich eines aus dem Stand der Technik bekannten, als Schaltelement ausgebildeten Funktionselements;
- Fig. 2a, 2b: Querschnitte durch eine Verteilerleiste im Bereich eines aus dem Stand der Technik bekannten, als Trennelement ausgebildeten Funktionselements;
- .Fig. 3a, 3b:: Querschnitte durch eine Verteilerleiste im Bereich eines als Schaltelement ausgebildeten Funktionselements;
- Fig. 4a, 4b:: Querschnitte durch eine Verteilerleiste im Bereich eines erfindungsgemäßen, als Trennelement ausgebildeten Funktionselements; und
- Fig. 5a, 5b:: perspektivische Ansichten von Kontaktfedern des erfindungsgemäßes Trennelements der Fig. 4a, 4b.

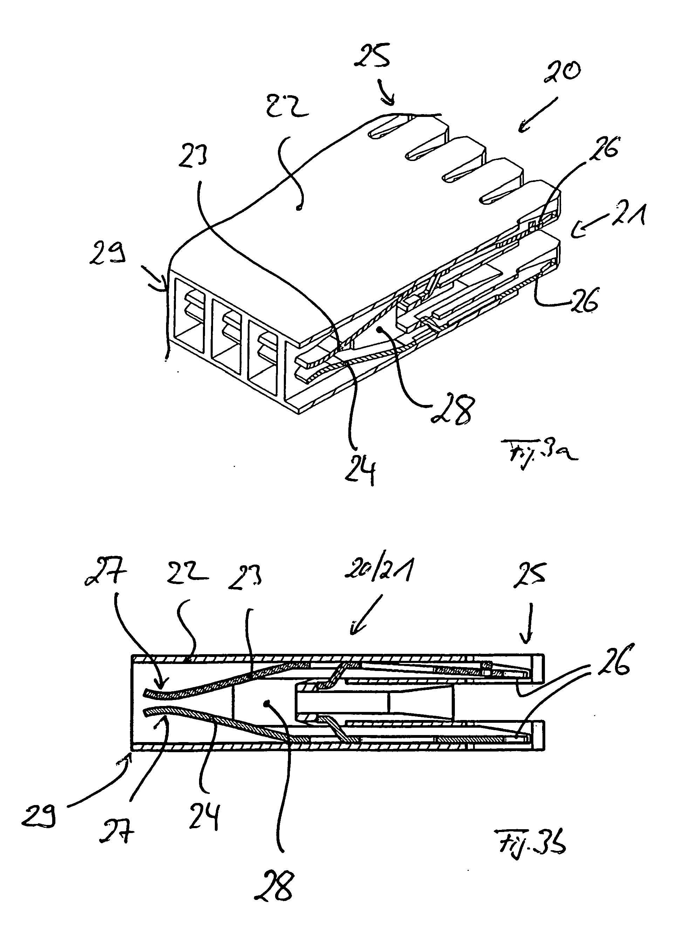

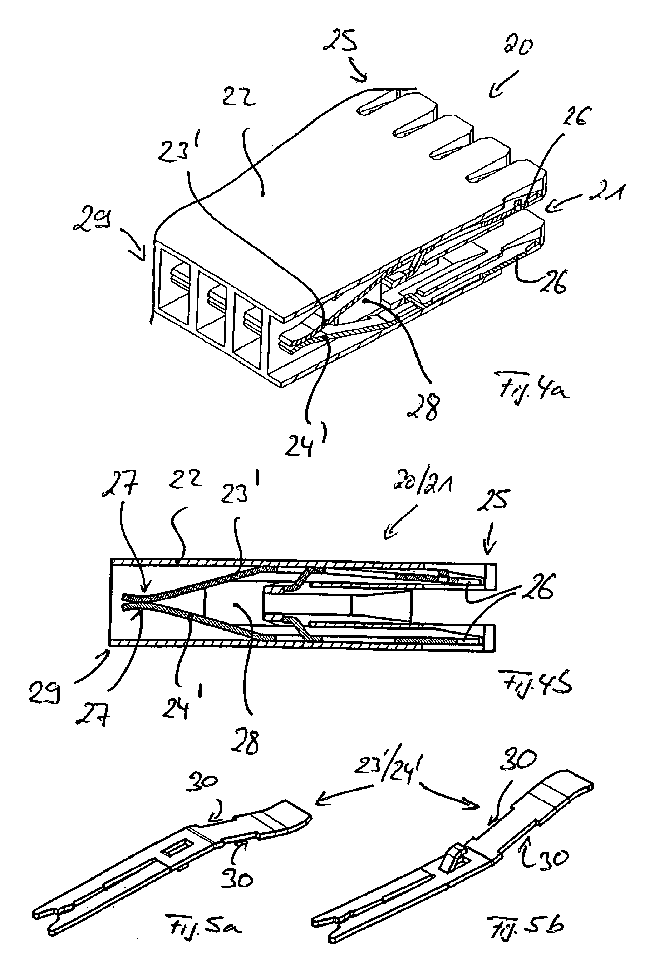

Fig. 3a bis 4b zeigen einen Querschnitt durch eine Verteilerleisten 20 im Bereich eines Funktionselements 21, welches in Fig. 3a, 3b als Schaltelement und in Fig. 4a, 4b als Trennelement ausgebildet ist. Die Verteilerleiste 20 verfügt über mehrere nebeneinander positionierte Funktionselemente 21, wobei jedes Funktionselement 21 in einem Gehäuse 22 positionierte Kontaktfedern 23, 24 (Fig. 3a, 3b) bzw. 23', 24' (Fig. 4a, 4b) aufweist.

Die Kontaktfedern 23, 24 bzw. 23', 24' bilden an einer Vorderseite 25 vorzugsweise als IDC-Kontakte ausgebildete Anschlusselemente 26 für den Anschluss von Kabeladern eines Teilnehmerkabels und/oder Systemkabels und/oder Rangierkabels aus.

An einem von den Anschlusselementen 26 benachbarten Abschnitt bilden die Kontaktfedern 23, 24 bzw. 23', 24' Kontaktpunkte 27 aus, wobei bei dem als Schaltelement ausgebildeten Funktionselement 22 die Kontaktpunkte 27 von übereinander positionierten, identischen Kontaktfedern 23, 24 (Fig. 3a, 3b) einander nicht berühren, sondern vielmehr unter Zwischenanordnung eines Trennstegs 28 voneinander getrennt sind. Bei dem als Trennelement ausgebildeten Funktionselement 22 berühren die Kontaktpunkte 27 von übereinander positionierten, identischen Kontaktfedern 23', 24' (Fig. 4a, 4b) trotz vorhandenem Trennsteg 28 und unveränderter Länge derselben einander.

Der zwischen zwei übereinander positionierten Kontaktfedern 23, 24 bzw. 23', 24' angeordnete Trennsteg 28 weist eine geringere Breite als die Kontaktfedern 23, 24 bzw. 23', 24' auf. Der zwischen zwei übereinander positionierten Kontaktfedern 23, 24 bzw. 23', 24' angeordnete Trennsteg 28 ist im Bereich von zwei sich gegenüberliegenden seitlichen Randabschnitten der Kontaktfedern 23, 24 bzw. 23', 24' zwischen der Vorderseite 25 und einer Rückseite 29 des Gehäuses 22 ausgebildet.

Zur Ausbildung eines Schaltelements (siehe Fig. 3a, 3b) berührt der Trennsteg 28 die übereinander positionierten Kontaktfedern 23, 24 derart, dass die Kontaktpunkte 27 der Kontaktfedern 23, 24 voneinander getrennt sind. Zur Ausbildung eines Trennelements (siehe Fig. 4a, 4b) ragt der Trennsteg 28 abschnittsweise in Ausnehmungen 30 der übereinander positionierten Kontaktfedern 23', 24' derart hinein, dass die Kontaktpunkte 27 der Kontaktfedern 23', 24' sich berühren. Die Ausnehmungen 30 sind in seitliche Abschnitte der Kontaktfedern 23', 24' eingebracht (siehe Fig. 5a, 5b).

Es liegt demnach im Sinne der hier vorliegenden Erfindung, dass der zwischen übereinander positionierten Kontaktfedern 23, 24 bzw. 23', 24' angeordnete Trennsteg 28 zwischen der Vorderseite 25 und der Rückseite 29 des Gehäuses 22 ausgebildet ist und eine geringere Breite aufweist als die Kontaktfedern 23, 24 bzw. 23', 24'.

Zur Ausbildung eines Schaltelements berührt der Trennsteg 28 die übereinander positionierten Kontaktfedern 23, 24, wobei dann die Kontaktfedern 23, 24 in den Abschnitten, in welchen der Trennsteg 28 dieselben berührt, keine Ausnehmungen aufweist. Zur Ausbildung eines Trennelements weisen hingegen die Kontaktfedern 23', 24' die Ausnehmungen 30 auf, in die dann der Trennsteg 28 hineinragen kann, sodass sich die Kontaktpunkte 27 der Kontaktfeder 23', 24' berühren können. Die Kontaktfedern 23, 24 sowie 23', 24' unterscheiden sich demnach nicht durch Ihre Länge, sondern lediglich durch das Vorhandensein der Ausnehmungen 30.

Beim erfindungsgemäßen Funktionselement 21 kann sowohl ausgehend von der Vorderseite 25 des Gehäuses 22 zwischen die Kontaktfedern 23, 24 bzw. 23', 24' ein insbesondere als Prüfeinrichtung oder Splittereinrichtung oder Schutzeinrichtung ausgebildetes Element unter Bereitstellung eines Kontakts zwischen den Kontaktfedern 23, 24 bzw. 23', 24' als auch ausgehend von der Rückseite 29 des Gehäuses 22 zwischen die Kontaktfedern 23, 24 bzw. 23', 24' ein insbesondere als Prüfeinrichtung oder Splittereinrichtung oder Schutzeinrichtung ausgebildetes Element unter Bereitstellung eines Kontakts zwischen den Kontaktfedern 23, 24 bzw. 23', 24' eingeführt werden.

Im Unterschied zum gezeigten Ausführungsbeispiel der Fig. 3a bis 5b ist es auch möglich, dass der zwischen zwei übereinander positionierten Kontaktfedern angeordnete Trennsteg ausschließlich im Bereich eines seitlichen Randabschnitts der Kontaktfedern ausgebildet ist. Zur Ausbildung eines Trennelements ragt der Trennsteg in Ausnehmungen der übereinander positionierten Kontaktfedern hinein, die an einem seitlichen Abschnitten der Kontaktfedern ausgebildet sind. Zur Ausbildung eines Schaltelements berührt der Trennsteg die Kontaktfedern ausschließlich an diesen seitlichen Abschnitten, die dann keine Ausnehmungen aufweisen.

Ebenso ist es möglich, dass der zwischen zwei übereinander positionierten Kontaktfedern angeordnete Trennsteg in einem mittleren Abschnitt ausgebildet ist, der zwischen seitlichen Randabschnitten der Kontaktfedern verläuft. Zur Ausbildung eines Trennelements ragt der Trennsteg dann in Ausnehmungen der übereinander positionierten Kontaktfedern hinein, die an einem mittleren Abschnitten der Kontaktfedern ausgebildet sind. Zur Ausbildung eines Schaltelements berührt der Trennsteg die Kontaktfedern an den mittleren Abschnitten, die dann wiederum keine Ausnehmungen aufweisen.

### Bezugszeichenliste

- 10: Verteilerleiste
- 11: Funktionselement
- 12: Gehäuse
- 13, 13': Kontaktfeder
- 14, 14': Kontaktfeder
- 15: Vorderseite
- 16: Anschlusselement
- 17: Kontaktpunkt
- 18: Trennsteg
- 19: Rückseite
- 20: Verteilerleiste
- 21: Funktionselement
- 22: Gehäuse
- 23, 23': Kontaktfeder
- 24, 24': Kontaktfeder
- 25: Vorderseite
- 26: Anschlusselement
- 27: Kontaktpunkt
- 28: Trennsteg
- 29: Rückseite
- 30: Ausnehmung

## Patentansprüche

1. Funktionselement (21) einer Telekommunikationsanlage, mit in einem Gehäuse (22) aufgenommenen Kontaktfedern (23',24'), wobei die Kontaktfedern (23',24') an einer Vorderseite des Gehäuses (22) insbesondere als IDC-Kontakte ausgebildete Anschlusselemente (26) für den Anschluss von Kabeladern eines Teilnehmerkabels und/oder Systemkabels und/oder Rangierkabels bilden, wobei in einem von den Anschtusselementen (26) beabstandeten Abschnitt von den Kontaktfedern (23,24) ausgebildete Kontaktpunkte (27) unter Ausbildung eines Trennelements unter Zwischenanordnung eines Trennstegs (28) zwischen den Kontaktfedern sich berühren wobei der zwischen übereinander positionierten Kontaktfedern (23', 24') angeordnete Trennsteg (28) eine geringere Breite aufweist als die Kontaktfedern (23', 24'), **dadurch gekennzeichnet dass** der Trennsteg (28) in Ausnehmungen (30) der übereinander positionierten Kontaktfedern (23', 24') derart hineinragt, dass die Kontaktpunkte der Kontaktfedern sich berühren.

2. Funktionselement nach Anspruch 1, **dadurch gekennzeichnet, dass** der zwischen zwei übereinander positionierten Kontaktfedern angeordnete Trennsteg (28) im Bereich von zwei sich gegenüberliegenden seitlichen Abschnitten der Kontaktfedern ausgebildet ist, und dass der Trennsteg (28) in Ausnehmungen (30) der übereinander positionierten Kontaktfedern (23', 24') hineinragt, die an zwei sich gegenüberliegenden seitlichen Abschnitten der Kontaktfedern (23', 24') ausgebildet sind.

3. Funktionselement nach Anspruch 1, **dadurch gekennzeichnet, dass** der zwischen zwei übereinander positionierten Kontaktfedern angeordnete Trennsteg ausschließlich im Bereich eines seitlichen Abschnitts der Kontaktfedern ausgebildet ist, und dass der Trennsteg in Ausnehmungen der übereinander positionierten Kontaktfedern hineinragt, die an einem seitlichen Abschnitt der Kontaktfedern ausgebildet sind.

4. Funktionselement nach Anspruch 1, **dadurch gekennzeichnet, dass** der zwischen zwei übereinander positionierten Kontaktfedern angeordnete Trennsteg im Bereich eines mittleren Abschnitts der Kontaktfedern ausgebildet ist, und dass der Trennsteg in Ausnehmungen der übereinander positionierten Kontaktfedern hineinragt, die an einem mittleren Abschnitt der Kontaktfedern ausgebildet sind.

5. Funktionselement nach einem der Ansprüche 1 bis 4, **dadurch gekennzeichnet, dass** ausgehend von der Vorderseite (25) des Gehäuses (22) zwischen die Kontaktfedern ein insbesondere als Prüfeinrichtung oder Splittereinrichtung oder Schutzeinrichtung ausgebildetes Element unter Bereitstellung eines Kontakts zwischen den Kontaktfedern einführbar ist, und dass zusätzlich ausgehend von der Rückseite (29) des Gehäuses (22) zwischen die Kontaktfedern ein insbesondere als Prüfeinrichtung oder Splittereinrichtung oder Schutzeinrichtung ausgebildetes Element unter Bereitstellung eines Kontakts zwischen den Kontaktfedern einführbar ist.

## Claims

1. Functional element (21) of a telecommunication system, having contact springs (23', 24') which are held in a housing (22), wherein the contact springs (23', 24') form connecting elements (26), in particular in the form of IDC contacts, on a front face of the housing (22) for the connection of cable cores of a subscriber cable and/or system cable and/or jumper cable, wherein contact points (27) which are formed in a section of the contact springs (23', 24') at a distance from the connecting elements (26) touch forming an isolating element, with an isolating web (28) arranged between the contact springs, wherein the isolating web (28) which is arranged between contact springs (23', 24') which are positioned one above the other has a narrower width than the contact springs (23', 24'), **characterized in that** the isolating web (28) projects into recesses (30) in the contact springs (23', 24') which are positioned one above the other such that the contact points of the contact springs touch.

2. Functional element according to Claim 1, **characterized in that** the isolating web (28) which is arranged between two contact springs which are positioned one above the other is formed in the area of two opposite side sections of the contact springs, and **in that** the isolating web (28) projects into recesses (30) in the contact springs (23', 24') which are positioned one above the other, which recesses (30) are formed on two opposite side sections of the contact springs (23', 24').

3. Functional element according to Claim 1, **characterized in that** the isolating web which is arranged between two contact springs which are positioned one above the other is formed exclusively in the area of one side section of the contact springs, and **in that** the isolating web projects into recesses in the contact springs which are positioned one above the other, which recesses are formed on a side section of the contact springs.

4. Functional element according to Claim 1, **characterized in that** the isolating web which is arranged between two contact springs which are positioned one above the other is formed in the area of a center section of the contact springs, and **in that** the isolating web projects into recesses in the contact springs which are positioned one above the other, which recesses are formed on a center section of the contact springs.

5. Functional element according to one of Claims 1 to 4, **characterized in that**, starting from the front face (25) of the housing (22), an element which is in particular in the form of a test device, a splitter device or a protective device can be inserted between the contact springs, by using a contact between the contact springs, and **in that**, in addition, starting from the rear face (29) of the housing (22), an element in particular in the form of a test device, a splitter device or a protective device can be inserted between the contact springs, producing a contact between the contact springs.

## Revendications

1. Élément fonctionnel (21) d'un équipement de télécommunication, comprenant des ressorts de contact (23', 24') logés dans un boîtier (22), les ressorts de contact (23', 24') formant sur un côté avant du boîtier (22) des éléments de raccordement (26) notamment réalisés sous la forme de contacts autodénudants pour le raccordement des fils de câble d'un câble d'abonné et/ou d'un câble système et/ou d'un câble d'interconnexion, des points de contact (27) formés par les ressorts de contact (23', 24') se touchant dans une section à l'écart des éléments de raccordement (26) en formant un élément de séparation en intercalant une barrette de séparation (28) entre les ressorts de contact, la barrette de séparation (28) disposée entre les ressorts de contact (23', 24') positionnés les uns au-dessus des autres présentant une largeur plus petite que celle des ressorts de contact (23', 24'), **caractérisé en ce que** la barrette de séparation (28) fait saillie dans des évidements (30) des ressorts de contact (23', 24') positionnés les uns au-dessus des autres de telle sorte que les points de contact des ressorts de contact se touchent.

2. Élément fonctionnel selon la revendication 1, **caractérisé en ce que** la barrette de séparation (28) disposée entre deux ressorts de contact positionnés l'un au-dessus de l'autre est formée dans la zone de deux sections latérales opposées des ressorts de contact et **en ce que** la barrette de séparation (28) fait saillie dans des évidements (30) des ressorts de contact (23', 24') positionnés les uns au-dessus des autres qui sont formés sur deux sections latérales opposées des ressorts de contact (23', 24').

3. Élément fonctionnel selon la revendication 1, **caractérisé en ce que** la barrette de séparation disposée entre deux ressorts de contact positionnés l'un au-dessus de l'autre est formée dans la zone d'une section latérale des ressorts de contact et **en ce que** la barrette de séparation fait saillie dans des évidements des ressorts de contact positionnés les uns au-dessus des autres qui sont formés sur une section latérale des ressorts de contact.

4. Élément fonctionnel selon la revendication 1, **caractérisé en ce que** la barrette de séparation disposée entre deux ressorts de contact positionnés l'un au-dessus de l'autre est formée dans la zone d'une section centrale des ressorts de contact et **en ce que** la barrette de séparation fait saillie dans des évidements des ressorts de contact positionnés les uns au-dessus des autres qui sont formés sur une section centrale des ressorts de contact.

5. Élément fonctionnel selon l'une des revendications 1 à 4, **caractérisé en ce qu'**en partant du côté avant (25) du boîtier (22), un élément notamment réalisé sous la forme d'un dispositif de test ou d'un dispositif de séparation ou d'un dispositif de protection peut être introduit entre les ressorts de contact en mettant à disposition un contact entre les ressorts de contact et **en ce qu'**en plus, en partant du côté arrière (29) du boîtier (22), un élément notamment réalisé sous la forme d'un dispositif de test ou d'un dispositif de séparation ou d'un dispositif de protection peut être introduit entre les ressorts de contact en mettant à disposition un contact entre les ressorts de contact.
